(19) Europäisches Patentamt
European Patent Office
Office européen des brevets

(11) Publication number: **0 227 419 B1**

(12) **EUROPEAN PATENT SPECIFICATION**

(45) Date of publication of patent specification: **18.05.94**

(51) Int. Cl.5: **G02F 1/137**, C09K 19/42

(21) Application number: **86309824.0**

(22) Date of filing: **16.12.86**

(54) **Ferroelectric liquid crystal mixture and optical modulation element using same.**

(30) Priority: **17.12.85 JP 283589/85**

(43) Date of publication of application:
**01.07.87 Bulletin 87/27**

(45) Publication of the grant of the patent:
**18.05.94 Bulletin 94/20**

(84) Designated Contracting States:
**DE FR GB**

(56) References cited:
**EP-A- 0 178 647**
**US-A- 4 615 586**

**JETP LETTERS, vol. 33, no. 10, May 20, 1981 ; L.A. BERESNEV et al. : "First nonhelicoidal ferroelectric crystal", pages 536-539.**

**T. HARADA et al., SID 85 DIGEST 16, pages 131-134 (1985).**

(73) Proprietor: **MATSUSHITA ELECTRIC INDUSTRIAL CO., LTD.**
**1006, Oaza Kadoma**
**Kadoma-shi, Osaka-fu, 571(JP)**

(72) Inventor: **Uemura, Tsuyoshi**
**41-26 Shigita**
**Higashiosaka-shi Osaka-fu 577(JP)**
Inventor: **Ohba, Noriko**
**1-12-20, Tezukayamaminami**
**Nara-shi Nara-ken, 631(JP)**
Inventor: **Wakita, Naohide**
**7-1-3-103, Maikodai**
**Tarumi-ku**
**Kobe-shi Hyogo-ken 655(JP)**
Inventor: **Ohnishi, Hiroyuki**
**2-13-30, Asahigaoka**
**Ikeda-shi Osaka-fu 563(JP)**
Inventor: **Ota, Isao**
**1-19-20, Komagawa**
**Higashisumiyoshi-ku**
**Osaka-shi Osaka-fu 546(JP)**

(74) Representative: **Crawford, Andrew Birkby et al**
**A.A. THORNTON & CO.**
**Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to a ferroelectric liquid crystal mixture and an optical modulation element incorporating it, usable in optical shutters and matrix display panels.

Today, twisted nematic (TN) type display system is most widely applied to liquid crystal optical modulation element. However, compared to other display systems such as plasma displays and electroluminescence displays for example, the twisted nematic type display system proves to be inferior to others in its response speed, and yet, no significant improvement has ever been achieved. Recently, a new display system using ferroelectric liquid crystal was proposed, which has drawn keen interests from the concerned in the light of its faster response speed and high matrix potentials. (N. A. Clerk, S. T. Lagerwall: Appl. Phys. Lett., 36,899 (1980), and T. Harada, et al, SID 85 DIGEST 16 131 (1985))

Conventionally, ferroelectric liquid crystal molecules contain chiral atoms, while each molecule is provided with helical structure due to its symmetrical characteristic. If the cell thickness (d) of the ferroelectric liquid crystal panel is thicker than pitch (L) (d > L), since the influence of the cell substrate surface doesn't reach the center of the cell, normally, the ferroelectric liquid crystal is present in the helically structured configuration. Conversely, if the cell thickness is thinner than pitch (d < L), the helical structure is dissociated by the force of the cell substrate surface, and as a result, two domains appear themselves, in which those molecules are present in parallel with the cell substrate surface. Molecules present in these two domains are respectively provided with permanent dipole moments, while these moments respectively face directions being opposite from each other in order that these moments can correctly match inclined angles of molecules against layer normal line.

To dissociate the helical structure of those ferroelectric liquid crystal molecules, conventionally, a system has been made available, in which, as is normally done for cholesteric-phase liquid crystals, ferroelectric liquid crystals provided with left handed helical structure and other ferroelectric liquid crystals having right handed helical structure are mixed together before eventually compensating for the helical structures. (Japanese Laid-Open Patent Application No. 61-174294 (1986), and J.E.T.P. Lett. Vol. 33, No. 10, pp 536 (1981))

After inserting ferroelectric liquid crystal having a greater pitch than the cell thickness (d < L) into a ferroelectric liquid crystal cell, the helical structure is fully dissociated, and as a result, two domains are generated. Then, if a specific electric field is applied in the layer normal direction, all the permanent dipole moments will face in the direction of the applied electric field, and then all the ferroelectric liquid crystals enter into a state each having a tilt angle $+\theta$. While this condition is present, if the direction of the polarized axis of a polarizer is set in the longitudinal axial direction of the molecule and the polarized axial direction of the polarizer is set in parallel with the short-axis direction of the molecule, linearly polarized light that has passed through the polarizer can be transmitted without being subjected to birefringence, and as a result, a dark state being shut off by the polarizer can be generated. On the other hand, if the electric field is applied in the opposite direction to the layer normal direction, all molecules will have a tilt angle $-\theta$, and thus, linearly polarized light that has passed through the polarizer will penetrate the polarizer due to birefringence effect to generate a bright state.

As described above, positive and negative electric fields generate dark and bright states. (High-velocity display using ferroelectric liquid crystal and the optronics; by Fukuda, Takezoe, and Kondoh, No. 9, page 64, 1983)

When using a ferroelectric liquid crystal cell having a specific thickness thinner than pitch is normally free from helical structure, and thus, even after removing electric field from it, a certain memory effect can be generated with molecules remaining unaffected. (Japanese Laid-Open Patent Application No. 56-107216)

In order to provide the memory effect, it is a useful system to use such ferroelectric liquid crystals as having pitch being greater than the cell thickness.

Since ferroelectric liquid crystal has layer structure, compared to any conventional nematic liquid crystal, it is considered to be difficult to achieve satisfactory orientation. In particular, any compound containing cholestric phase in the phase-change (or phase sequence) system cannot achieve satisfactory orientation if the cholesteric phase pitch is short, and as a result, like the pitch of ferroelectric liquid crystal, any of conventional systems extends the pitch (Lch) of the cholesteric phase by mixing ferroelectric liquid crystal having left handed helical structure in the cholesteric phase and other ferroelectric liquid crystal having right handed helical structure in the cholesteric phase together before eventually compensating for the helical structures. (Japanese Laid-Open Patent Applicantion No. 61-174294)

In order to actually apply ferroelectric liquid crystal mixture to optical modulation element, ferroelectric characteristic should be proven in an extensive temperature range. To securely achieve this, a wide variety

of ferroelectric liquid crystal material should be mixed together. In addition, in order to generate satisfactory ferroelectric liquid crystal mixture having a large pitch (L and Lch), mixing operation should be done by carefully checking to see the magnitude of the pitch of a variety of individual ferroelectric liquid crystal materials, orientation to the left and to the right, and their dependency on temperature, etc. Actually, since it is difficult to generate such ferroelectric liquid crystal mixture having a large pitch, the helical structure cannot be dissociated unless such a panel having considerably thin cell thickness is employed, and yet, any conventional system can merely produce such an optical modulation element having insufficient memory characteristic and poor display quality.

A primary object of the present invention is to easily provide a satisfactory ferroelectric liquid crystal mixture featuring a wide temperature range and extremely long pitches (L and Lch) and also provide a ferroelectric liquid crystal optical modulation element by applying the above mixture, which features satisfactory orientation characteristic and high display quality being free from helical structure.

EP-A-0178647 which forms part of the state of the art under Article 54(3) only, discloses a ferroelectric liquid crystal mixture comprising a mixture of chiral materials, one of the materials having at least one of the helical directions of either cholesteric or ferroelectric phase opposite from another of the materials; and a non-chiral liquid crystal material.

A ferroelectric liquid crystal mixture according to the preamble of claim 1 is disclosed by J.E.T.P. Letters Vol. 33, No. 10, pp 536 (1981).

The present invention provides a ferroelectric liquid crystal mixture comprising a mixture of at least two chiral materials which have helical directions of either cholesteric phase or ferroelectric phase and each of which has a smectic C chiral phase, wherein the helical directions of said at least two chiral materials are opposite to each other, characterised by further comprising a non-chiral liquid crystal material.

To produce this mixture, first, chiral materials having opposite chiral directions are mixed together before eventually making up long-pitch ferroelectric liquid crystal mixture being free from helical structure. The prepared mixture may be of narrow temperature range and may not be of ferroelectric liquid crystal. Next, a liquid crystal material which is inherently not chiral, i.e., which is totally free from helical structure, is mixed with the prepared mixture. For example, such a liquid crystal material as having smectic C phase, preferably having a wide temperature range and low viscosity, is used as the mixing material. When mixing these liquid crystal materials, since individual liquid crystal material is free from helical structure, mixing can be done without considering the left and right of pitch. As a result, a satisfactory liquid crystal mixture featuring a wide temperature range and freedom from helical structure can easily be obtained. Furthermore, a ferroelectric optical modulation elements featuring satisfactory orientation characteristic even with relatively large cell thickness and satisfactory display quality can also be produced.

The present invention produces a long-pitch mixture (Ch phase and SmC* phase) free from helical structure by mixing chiral materials containing inverted helical structures (Ch phase and SmC* phase), and thereafter produces a long-pitch ferroelectric liquid crystal mixture by mixing the long-pitch mixture with a non-chiral liquid crystal mixture. Since this mixture has an extremely long pitch, a ferroelectric liquid crystal optical modulation element featuring satisfactory memory characteristic and high display quality derived from satisfactory orientation characteristic usefully applicable to optical modulation elements and optical shutter can eventually be produced.

A ferroelectric liquid crystal optical modulation element according to the preamble of claim 8 is disclosed by T. Harada et al, SID 85 DIGEST 16, pages 131-134, (1985).

The present invention also provides a ferroelectric liquid crystal optical modulation element characterised in that the liquid crystal layer comprises a ferroelectric liquid crystal mixture comprising a mixture of at least two chiral materials which have helical directions of either cholesteric phase or ferroelectric phase, and a non-chiral liquid crystal material, wherein the helical directions of said at least two chiral materials are opposite to each other.

Basically, since only two kinds of chiral materials are needed, the mixture of the invention dispenses with compensation for pitches and temperature dependency of a variety of chiral materials otherwise needed for any of conventional systems, and as a result, the invention can easily manufacture ferroelectric liquid crystal optical modulation element featuring a wide temperature range. In addition, by effectively mixing non-chiral compounds containing SmC phase, response time can securely be shortened.

The present invention will be better understood from the detailed description given hereinbelow and the accompanying drawings which are given by way of illustration only, and thus are not limitative of the present invention in which:

Fig. 1 is a graphical presentation of memory effect in the relationship between voltage and transmission rate of a ferroelectric liquid crystal panel of the present invention;

Fig. 2 is a graphical chart denoting a relationship between the mixture rate and pitch of a right handed chiral material and a left handed chiral material;
Fig. 3 is a schematic diagram of an optical modulation element reflecting an embodiment of the present invention;
Fig. 4 is a schematic diagram denoting a testing system used for measuring optical characteristic;
Fig. 5 is a graphical presentation of a mixture phase used for a second preferred embodiment;
Fig. 6 is a graphic chart denoting a spontaneous polarization of the mixture prepared by the second preferred embodiment;
Fig. 7 is a graphical presentation denoting a response time of the mixture prepared by the second preferred embodiment;
Fig. 8 is a graphic chart denoting a mixture phase prepared by a third preferred embodiment;
Fig. 9 is a graphical chart denoting a response time of the mixture prepared by the third preferred embodiment; and
Fig. 10 is a graphical chart denoting a spontaneous polarization of the mixture prepared by the third preferred embodiment.

DESCRIPTION OF THE PREFERRED EMBODIMENTS

(Preferred embodiment No. 1)

Molecular formulas and phase-shifting temperature of (+) - DOBAMBC incorporating a chiral material having a right handed helical structure of SmC* phase and (-) - HOBACPC incorporating a chiral material having a left handed helical structure of SmC* phase are shown below.

(+) - DOBAMBC

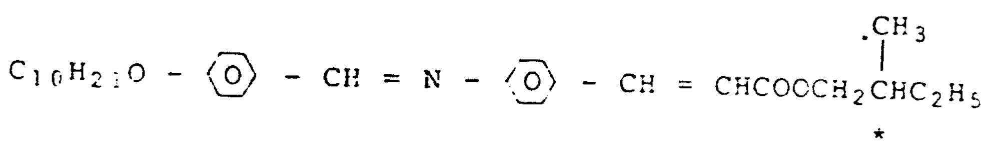

(-) - HOBACPC

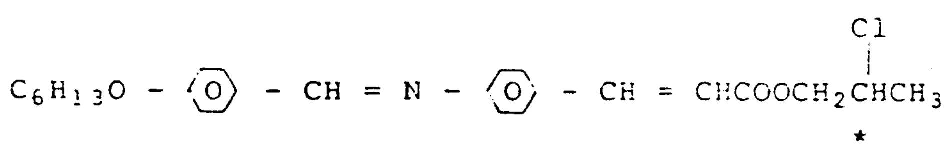

Cry —— SmC* —— SmA —— Iso

76 93 117 (°C)

Note: Asterisks (*) shown above respectively denote chiral atoms. Cry denotes a crystal phase and Iso denotes an isotropic liquid.

Fig. 2 represents variation of the pitch of helical structure of SmC* phase in the mixtures of the above materials. Measurement was done using a cell hating a thickness of 200 $\mu$m at a point 4°C below $T_{CA}$ at which smectic C chiral phase started to shift itself into smectic A phase. Fig. 2 clearly indicates that the pitch of SmC* phase extends itself in about 55% by weight of mixture made from HOBACPC, thus eventually causing helical structure to disappear completely. Next, the inventors prepared ester compound and pyrimidine compound to make up non-chiral liquid crystal containing smectic C phase. Molecular formulas, composition ratio, and phase-shifting temperature are respectively shown below. Note that non-chiral mixture containing smectic C phase is denoted to be (SmC(1)).

Ester compound

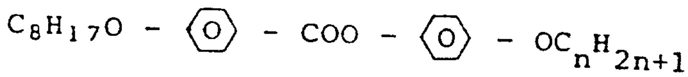

| | wt % |
|---|---|
| n = 4 | 15 |
| n = 6 | 15 |
| n = 7 | 15 |
| n = 9 | 15 |

Pyrimidine compound

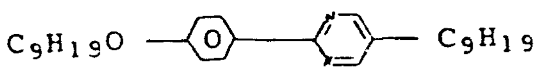 15

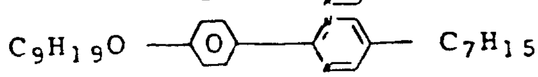 10

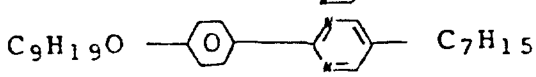 15

Cr —— SmC —— SmA —— N —— Iso

0.5 54.5 59.5 70.2 (°C)

Where Cr denotes crystal phase, SmC smectic C phase, SmA smectic A phase, N nematic phase, and Iso denotes isotropic liquid.

Next, the inventors mixed the mixture of DOBAMBC (45 wt%) and HOBACPC (55 wt%) together with the ester compound shown above at 20:80 weight ratio to obtain a smectic liquid crystal exhibiting ferroelectric characteristic at room temperature.

This mixture proved to have SmC* phase free from helical structure even when the cell thickness is 200 µm. It had about $2nc/cm^2$ of spontaneous polarization at 20 °C. Orientation of the prepared ferroelectric liquid crystal was produced by first forming a transparent conductive film on a glass substrate followed by formation of a polyimid high-polymer film on it, and then rubbing the laid-up film. Using a polarized microscope, the inventors then measured pitch by visually observing the ferroelectric liquid crystal mixture sealed inside of a cell after the orientation process.

By applying the prepared ferroelectric liquid crystal mixture having a long pitch, the inventors then manufactured an optical modulation element. Fig. 3 shows the schematic constitution of the optical modulation element prepared by the first preferred embodiment. The optical modulation element shown in Fig. 3 is provided with a pair of polarized sheets 1, a pair of glass substrates 2, a pair of transparent electrode layers 3, a pair of organic polymer layers 4 complete with an orientation process, a ferroelectric liquid crystal layer 5, and spacers 6 used for regulating distance (cell thickness) between opposite substrates constant. The inventors thus completed production of a ferroelectric liquid crystal optical modulation element by enclosing the prepared ferroelectric liquid crystal mixture with extended pitch between the electrodes which are opposite from each other.

The orientation was provided by rubbing the organic polymer layer laid on the glass substrate. After enclosing the ferroelectric liquid crystal, the panel was heated to 100 °C so that the liquid crystal is converted into an isotropic liquid, and then, slowly cooled at 0.6 °C/ minute of rate to obtain a mono-domain containing smectic C chiral phase. It should be understood, however, that the present invention is not limitative of the constitution of the optical modulation element produced by the above preferred embodiment, but glass substrates may be replaced by the polymer layer substrates for example. Furthermore, at least one of the substrates may be transparent, whereas the other substrate may merely function as a reflection sheet. Next, the inventors measured "voltage - transmission-rate curve" (hereinafter called B-V curve) using the panel thus produced.

Fig. 4 shows an optical testing system used for measurement of the B-V curve. White a light emitted from a light source 7 passes through a polarizer 8 and then enters into a liquid crystal cell 9 as a linearly polarized light. The light then passes through a polarizer 10, which is then focussed by a condenser 11 to allow a photomultiplier 12 to sense it before being measured by a storage-oscilloscope 13 as the B-V curve. Any waveforms can be applied to the liquid crystal using a programmable pulse generator 14. The thickness of the tested ferroelectric liquid crystal panel cell was 3.0 μm. Fig. 1 (a) and (b) respectively denote the obtained B-V curves, in which horizontal axes denotes time (t), whereas vertical axes denote either voltage (V) and brightness (B). Fig. 1 (a) denotes applied voltage waveform and (b) the corresponding brightness curve. It is clear from Fig. 1 (a) and (b) that the transmission rate remains constant even when voltage becomes zero volt, thus providing memory effect. While executing this operation, voltage pulse had -20 through +20 (V) of height, 1 second of pulse width and 20 seconds of pulse interval.

Normally, when preparing a ferroelectric liquid crystal panel, since the response time is proportional to the cell thickness, available thickness of liquid crystal layer is considered to be a maximum of 10 μm. To achieve this, pitch should at least be a minimum of 10 μm. In the first preferred embodiment, the chiral material mixture contains smectic C phase. However, actually, it may not necessarily contain smectic C phase, but it may also be smectic I chiral phase, or smectic J chiral phase, or smectic G chiral phase, for example. Such chiral material mixtures may eventually prove to be of ferroelectric liquid crystal phase.

(Preferred embodiment No. 2)

To improve orientation characteristic of ferroelectric liquid crystal mixture containing cholesteric phase in conjunction with phase requirements of ferroelectric liquid crystal, the second preferred embodiment provides means for extending pitch of the cholesteric phase.

To implement the second preferred embodiment, the inventors used selected compound including A1 having helical structure in the right hand direction and B1 having helical structure in the left hand direction respectively containing chiral materials. Mixture A1 and B1 are respectively mixed together with nematic liquid crystal mixture TN619 (a product of ROSCHE). Then, the inventors measured proper pitch of the prepared mixture using wedge-type cells, and finally determined the ratio in order that the cholesteric phase pitch can emanate itself.

(Reference: Matsumura and Iwayanagi; Applied Physics, Vol. 43 (1974) pp125)

Molecular formulas, composition ratio, and phase-shifting temperature are respectively shown below. The prepared chiral mixture is called (SmC*(1)).

SmC* (helical structure in the right hand direction)

wt %

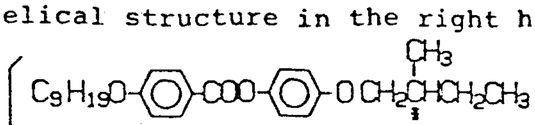

54.6

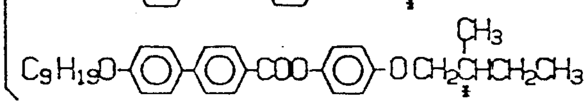

23.4

} A1

SmC*(1)

SmC* (helical structure in the left hand direction)

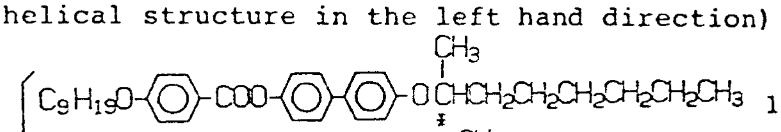

17.6

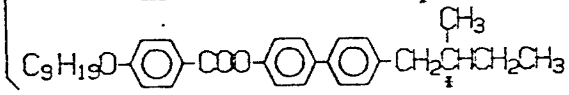

4.4

} B1

Cr — SmC* — SmA — Ch — Iso

30 62.5 74.5 86.5 (°C)

SmC* denotes smectic C chiral phase. The inventors used (SmC(1)) which was composed of ester-and-pyrimidine compound being substantially the mixture indicating non-chiral smectic C phase. Fig. 5 shows

the blended phases of the mixture containing (SmC*(1)) and (SmC(1)). Fig. 5 clearly indicates that about 50 wt% of mixing ratio provides the most extensive temperature range.

Figs. 6 and 7 respectively show the response time and spontaneous polarization of the prepared mixture as the optical modulation element. To check the response time, the inventors used the optical system mentioned in the first preferred embodiment, and used ∓20 V of rectangular waveforms for measuring the response time. The response time was defined to be a period of time from the moment when the rectangular waveform was applied to the moment when 90% of optical change was realized. Also, using triangular waveforms, the inventors checked the spontaneous polarization. (Reference: K. Miyasato, S. Abe, H. Takezoe, A. Fukuda, and E. Kuze; Japan J. Appl. Phys. Vol. 22 (1983) L661 - 663)

Next, the inventors manufactured an optical modulation element by applying the method described earlier, while adjusting the cell thickness to be exactly 2.0 μm. Since the pitch of cholesteric phase adequately extended itself, the prepared mixture proved to be of extremely satisfactory orientation characteristics. Fig. 6 indicates that the rate of spontaneous polarization diminishes as the chiral element decreases. Fig. 7 indicates that the response time is shortest when 50 wt% of blend ratio is applied. Normally, the response time is calculated by equation (1) shown below.

$$\tau = \eta / P \cdot E \qquad (1)$$

where $\tau$ denotes response time, $\eta$ viscosity, P spontaneous polarization, and E electric field.

As a result, addition of compound which indicates non-chiral SmC phase causes spontaneous polarization to diminish itself and viscosity to also lower itself, thus the response time may be shortened. In the second preferred embodiment, the mixture composed of chiral materials contains smectic C chiral phase. However, actually, it may not necessarily be of smectic C phase, but it may also be of smectic I chiral phase, or smectic J chiral phase, or smectic G chiral phase for example. Such chiral material mixtures should merely and eventually prove to be of ferroelectric liquid crystal phase.

(Preferred embodiment No. 3)

Another preferred embodiment using extended pitch of cholesteric phase is described below. To implement the third preferred embodiment, the inventors used chiral material A1 having helical structure in the right hand direction and chiral material B1 having helical structure in the left hand direction. Mixing ratio and phase-shifting temperature of these mixtures are shown below. The mixture having the cholesteric-phase pitch being extended by this method is called (SmC*(2)).

SmC* (helical structure in the right hand direction)

wt %

SmC* (2)

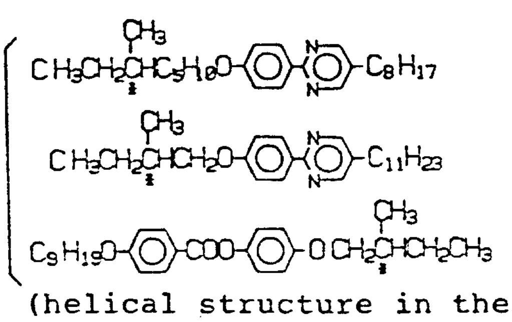

53.8

13.4

16.8

A2

SmC* (helical structure in the left hand direction)

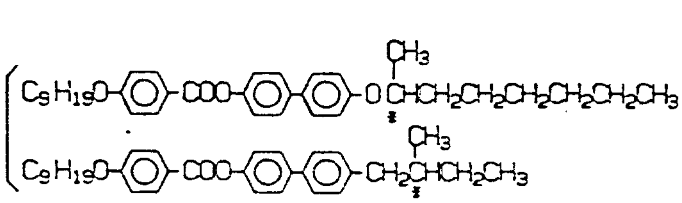

12.8

3.2

B2

Cr ⟶ SmC* ⟶ SmA ⟶ Ch ⟶ Iso

32 58.5 68.5 73.5 (℃)

The inventors used non-chiral mixture composed of (SmC(1)) mentioned earlier. Fig. 8 shows the phase of the mixture. Fig. 8 indicates that about 50 wt% of mixture provides the widest temperature range. Like the

preceding preferred embodiments, those mixtures prepared by the third preferred embodiment also generated satisfactory orientation characteristic.

Figs. 9 and 10 respectively denote spontaneous polarization and response time of these mixtures. Fig. 9 indicates that the rate of spontaneous polarization diminishes itself relative to the decrease of chiral elements, whereas Fig. 10 indicates that the shortest response time is available using about 25 wt% of (SmC(1)). As a result, it is understood that mixing of non-chiral compound results in the lowered viscosity. The chiral-material mixture used for the third preferred embodiment contains smectic C chiral phase. However, actually, it may not necessarily be of smectic C phase, but it may also be of smectic I chiral phase, or smectic J chiral phase, or smectic G chiral phase for example. Such chiral material mixture should merely and eventually prove to be of ferroelectric liquid crystal phase.

**Claims**

1. A ferroelectric liquid crystal mixture comprising a mixture of at least two chiral materials which have helical directions of either cholesteric phase or ferroelectric phase and each of which has a smectic C chiral phase, wherein the helical directions of said at least two chiral materials are opposite to each other, characterised by further comprising a non-chiral liquid crystal material.

2. The ferroelectric liquid crystal mixture according to claim 1, wherein said non-chiral liquid crystal material has a smectic C phase.

3. The ferroelectric liquid crystal mixture according to claim 1, wherein said non-chiral liquid crystal material has a smectic I phase.

4. The ferroelectric liquid crystal mixture according to claim 1, wherein said non-chiral liquid crystal material has a smectic G phase.

5. The ferroelectric liquid crystal mixture according to claim 1, wherein a pitch of ferroelectric liquid crystal phase of said ferroelectric liquid crystal mixture is at least 10 $\mu$m.

6. The ferroelectric liquid crystal mixture according to claim 1, wherein a pitch of said cholesteric phase is at least 10 $\mu$m when said ferroelectric liquid crystal mixture has a cholesteric phase at any temperature higher than an upper phase-shift temperature of the ferroelectric liquid crystal phase.

7. A ferroelectric liquid crystal optical modulation element comprising:
   a liquid crystal layer (5);
   a plurality of substrates (2) including at least a transparent substrate, which are arranged for sandwiching said liquid crystal layer (5);
   a pair of electrode layers (3) arranged on said substrates for applying voltage to said liquid crystal layer (5);
   wherein said liquid crystal layer comprises a ferroelectric liquid crystal mixture according to any one of claims 1 to 6.

8. A ferroelectric liquid crystal optical modulation element comprising:
   a liquid crystal layer (5);
   a plurality of substrates (2) including at least a transparent substrate, which are arranged for sandwiching said liquid crystal layer;
   a pair of electrode layers (3) arranged on said substrates for applying voltage to said liquid crystal layer,
   characterised in that said liquid crystal layer comprises a ferroelectric liquid crystal mixture comprising a mixture of at least two chiral materials which have helical directions of either cholesteric phase or ferroelectric phase, and a non-chiral liquid crystal material, wherein the helical directions of said at least two chiral materials are opposite to each other.

**Patentansprüche**

1. Ferroelektrische Flüssigkristall-Mischung, welche eine Mischung aus wenigstens zwei chiralen Materialien umfaßt, die helicale Richtungen entweder einer cholesterischen Phase oder einer ferroelektrischen

Phase aufweisen und von denen jede eine chirale smektische C-Phase aufweist, worin die helicalen Richtungen der wenigstens zwei chiralen Materialien entgegengesetzt zueinander sind, dadurch gekennzeichnet, daß sie außerdem ein nicht-chirales Flüssigkristall-Material umfaßt.

**2.** Ferroelektrische Flüssigkristall-Mischung nach Anspruch 1, worin das nicht-chirale Flüssigkristall-Material eine smektische C-Phase aufweist.

**3.** Ferroelektrische Flüssigkristall-Mischung nach Anspruch 1, worin das nicht-chirale Flüssigkristall-Material eine smektische I-Phase aufweist.

**4.** Ferroelektrische Flüssigkristall-Mischung nach Anspruch 1, worin das nicht-chirale Flüssigkristall-Material eine smektische G-Phase aufweist.

**5.** Ferroelektrische Flüssigkristall-Mischung nach Anspruch 1, worin die Ganghöhe der ferroelektrischen Flüssigkristall-Phase der ferroelektrischen Flüssigkristall-Mischung wenigstens 10 $\mu$m beträgt.

**6.** Ferroelektrische Flüssigkristall-Mischung nach Anspruch 1, worin die Ganghöhe der cholesterischen Phase wenigstens 10 $\mu$m beträgt, wenn die ferroelektrische FlüssigkristallMischung bei irgendeiner Temperatur über der Shift-Temperatur der oberen Phase (upper phase-shift temperature) der ferroelektrischen Flüssigkristall-Phase eine cholesterische Phase aufweist.

**7.** Optisches Modulationselement mit einem ferroelektrischen Flüssigkristall mit
- einer Flüssigkristall-Schicht (5);
- einer Mehrzahl von Substraten (2) einschließlich wenigstens eines transparenten Substrats, die in sandwichartiger Anordnung um die Flüssigkristall-Schicht (5) angeordnet sind; und
- einem Paar Elektroden-Schichten (3), die auf den Substraten zum Anlegen einer Spannung an die Flüssigkristall-Schicht (5) angeordnet sind;

worin die Flüssigkristall-Schicht eine ferroelektrische Flüssigkristall-Mischung nach einem der Ansprüche 1 bis 6 umfaßt.

**8.** Optisches Modulationselement mit einem ferroelektrischen Flüssigkristall mit
- einer Flüssigkristall-Schicht (5);
- einer Mehrzahl von Substraten (2) einschließlich wenigstens eines transparenten Substrats, die in sandwichartiger Anordnung um die Flüssigkristall-Schicht (5) angeordnet sind; und
- einem Paar Elektroden-Schichten (3), die auf den Substraten zum Anlegen einer Spannung an die Flüssigkristall-Schicht (5) angeordnet sind;

dadurch gekennzeichnet, daß die Flüssigkristall-Schicht eine ferroelektrische Flüssigkristall-Mischung umfaßt, die eine Mischung aus wenigstens zwei chiralen Materialien, die helicale Richtungen entweder einer cholesterischen Phase oder einer ferroelektrischen Phase aufweisen, und ein nicht-chirales Flüssigkristall-Material umfaßt, worin die helicalen Richtungen der wenigstens zwei chiralen Materialien entgegengesetzt zueinander sind.

**Revendications**

**1.** Mélange de cristal liquide ferro-électrique comprenant un mélange d'au moins deux matières chirales qui ont des directions en hélice soit de phase cholestérique soit de phase ferro-électrique et dont chacune à une phase chirale smectique C, dans laquelle les directions en hélice desdites au moins deux matières chirales sont opposées l'une à l'autre, caractérisées en ce qu'elles comprennent en plus une matière de cristal liquide non-chiral.

**2.** Mélange de cristal liquide ferro-électrique selon la revendication 1, dans lequel ladite matière à cristal liquide non-chiral a une phase smectique C.

**3.** Mélange de cristal liquide ferro-électrique selon la revendication 1, dans lequel ladite matière à cristal liquide non-chiral a une phase smectique I.

**4.** Mélange de cristal liquide ferro-électrique selon la revendication 1, dans lequel ladite matière à cristal liquide non-chiral a une phase smectique G.

5. Mélange de cristal liquide ferro-électrique selon la revendication 1, dans lequel un pas de la phase à cristal liquide ferro-électrique dudit mélange à cristal liquide ferro-électrique est au moins de 10 µm.

6. Mélange de cristal liquide ferro-électrique selon la revendication 1, dans lequel un pas de ladite phase cholestérique est au moins de 10 µm lorsque ledit mélange du cristal liquide ferro-électrique a une phase cholestérique à une température quelconque plus élevée qu'une température supérieure de décalage de phase, de la phase à cristal liquide ferro-électrique.

7. Elément de modulation optique à cristal liquide ferro-électrique comprenant :
une couche de cristal liquide (5) ;
une pluralité de substrats (2) comportant au moins un substrat transparent, qui sont disposés pour prendre en sandwich ladite couche de cristal liquide (5) ;
une paire de couches d'électrodes (3) disposée sur lesdits substrats pour appliquer une tension à ladite couche de cristal liquide (5) ;
dans lequel ladite couche de cristal liquide comprend un mélange de cristal liquide ferro-électrique selon l'une quelconque des revendications 1 à 6.

8. Elément de modulation optique à cristal liquide ferro-électrique comprenant :
une couche de cristal liquide (5) ;
une pluralité de substrats (2) comportant au moins un substrat transparent, qui sont disposés pour prendre en sandwich ladite couche de cristal liquide (5) ;
une paire de couches d'électrodes (3) disposée sur lesdits substrats pour appliquer une tension à ladite couche de cristal liquide (5) ;
caractérisé en ce que ladite couche de cristal liquide comprend un mélange de cristal liquide ferro-électrique comprenant un mélange d'au moins deux matières chirales qui ont des directions en hélice soit de la phase cholestérique soit de la phase ferro-électrique, et une matière à cristal liquide non-chiral, dans lequel les directions en hélice desdites au moins deux matières chirales sont opposées l'une à l'autre.

Fig. 1

(a)

(b)

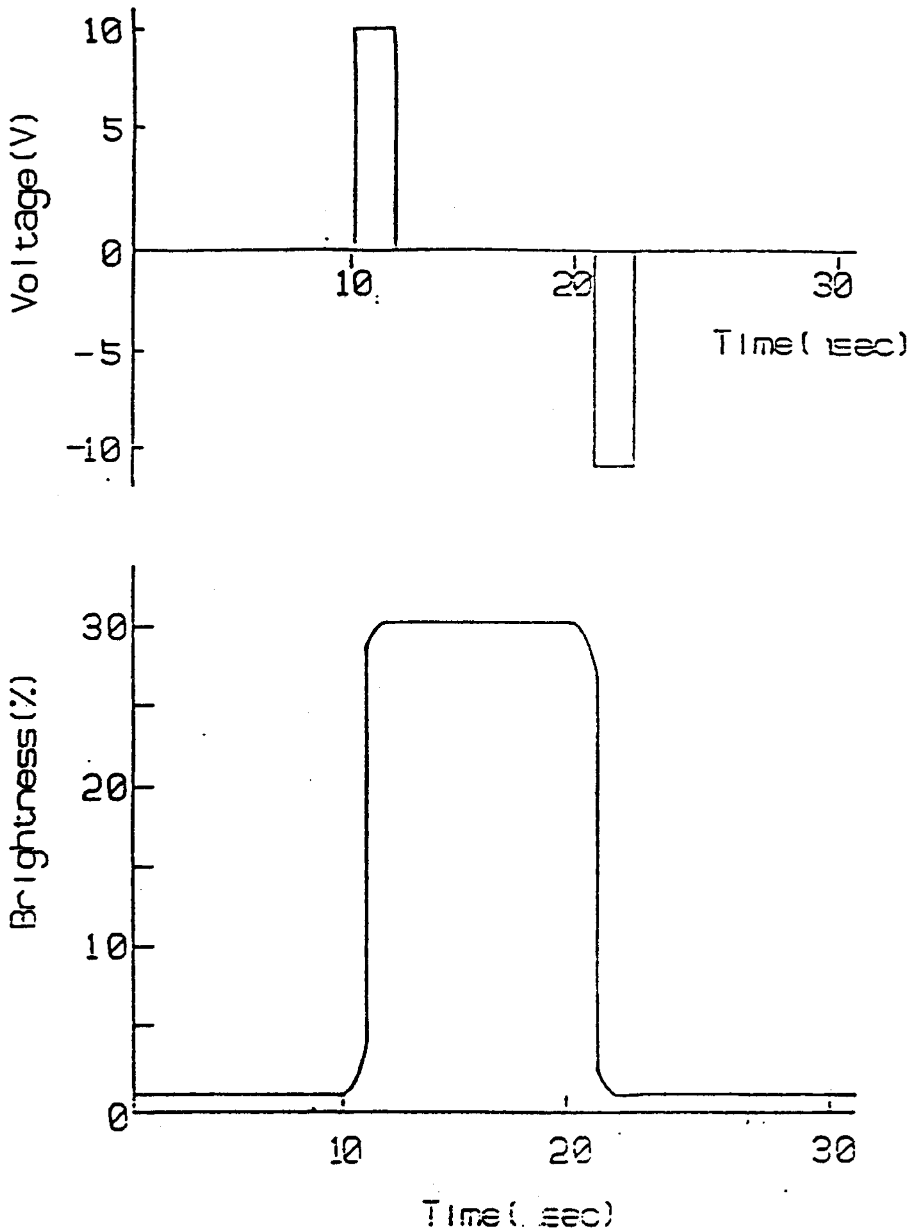

Voltage(V)
10
5
0
-5
-10
10
20
30
Time( sec)
Brightness(%)
30
20
10
0
10
20
30
Time( sec)

Fig. 2

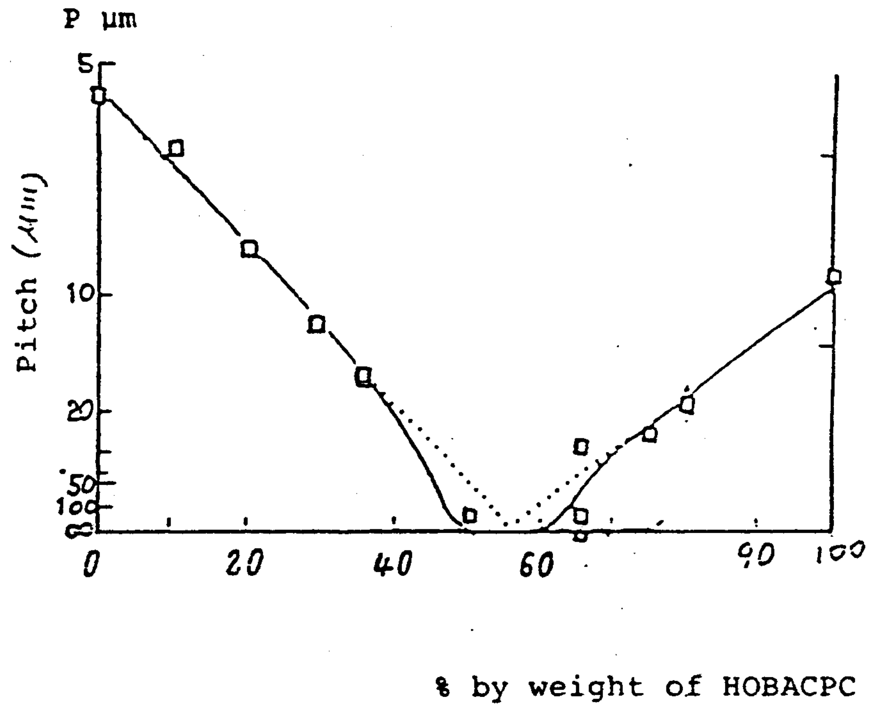

Fig. 3

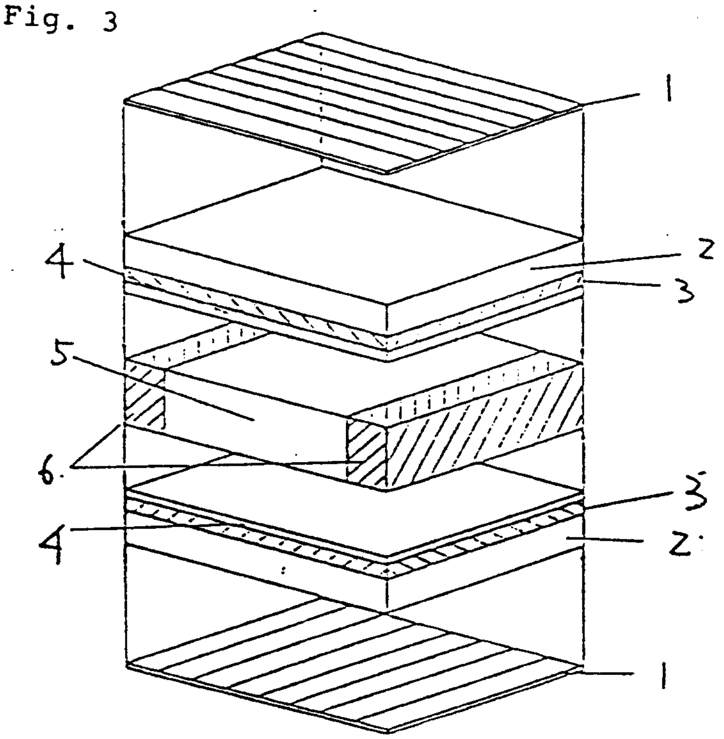

Fig. 4

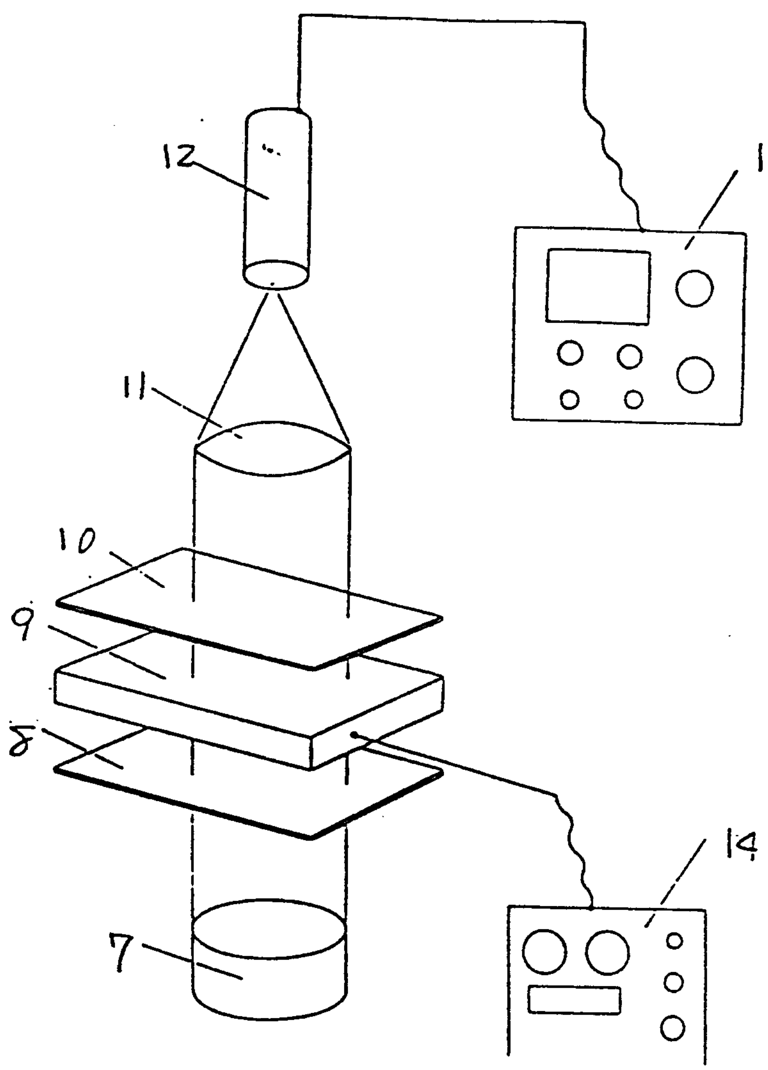

Fig. 5

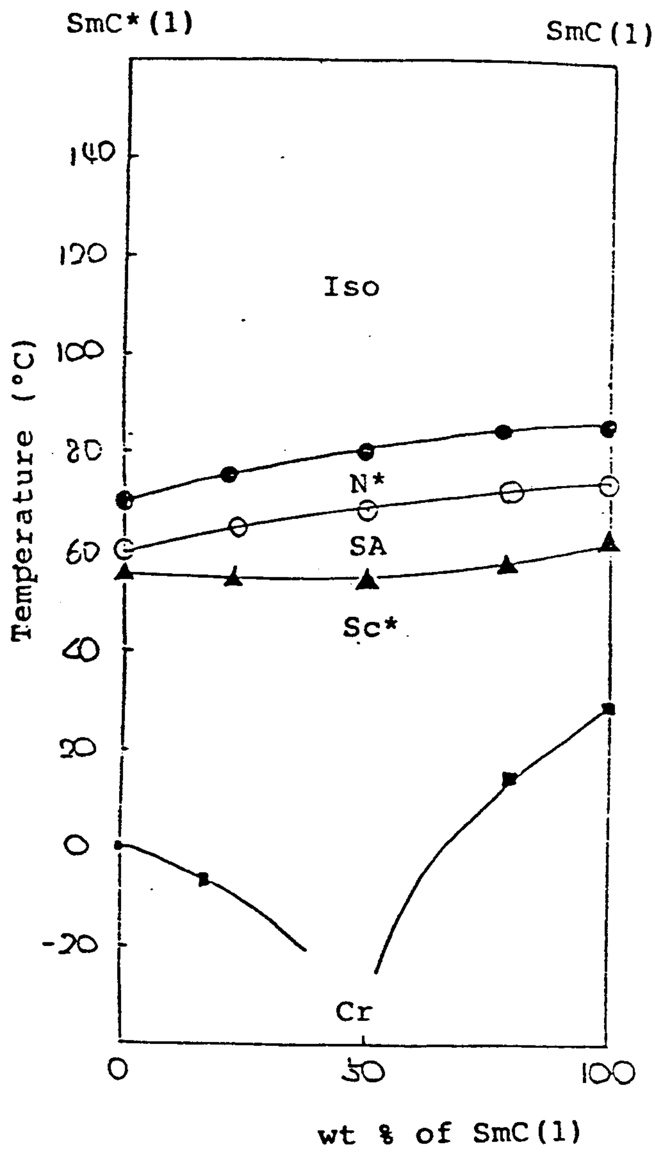
SmC*(1)
SmC(1)
140
120
100
80
60
40
20
0
-20
Temperature (°C)
Iso
N*
SA
Sc*
Cr
0
50
100
wt % of SmC(1)

Fig. 6

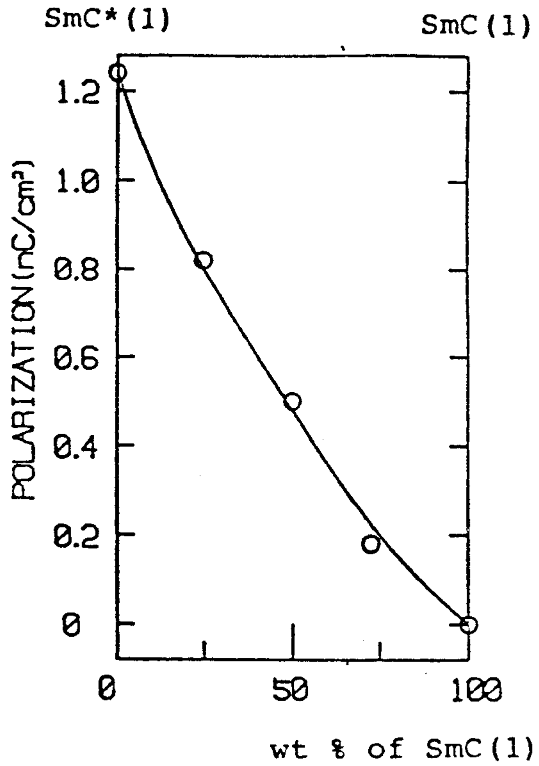
SmC*(1)
SmC(1)
POLARIZATION(nC/cm²)
1.2
1.0
0.8
0.6
0.4
0.2
0
0
50
100
wt % of SmC(1)

Fig. 7

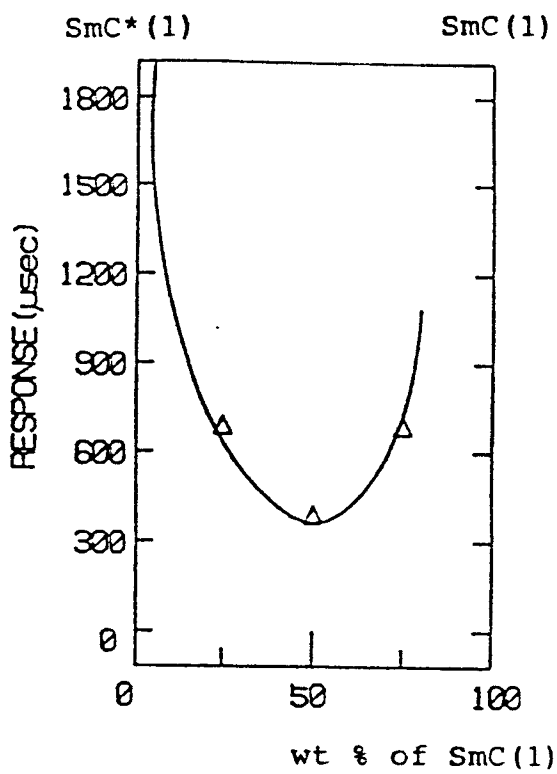
SmC*(1)
SmC(1)
RESPONSE (μsec)
1800
1500
1200
900
600
300
0
0
50
100
wt % of SmC(1)

Fig. 8

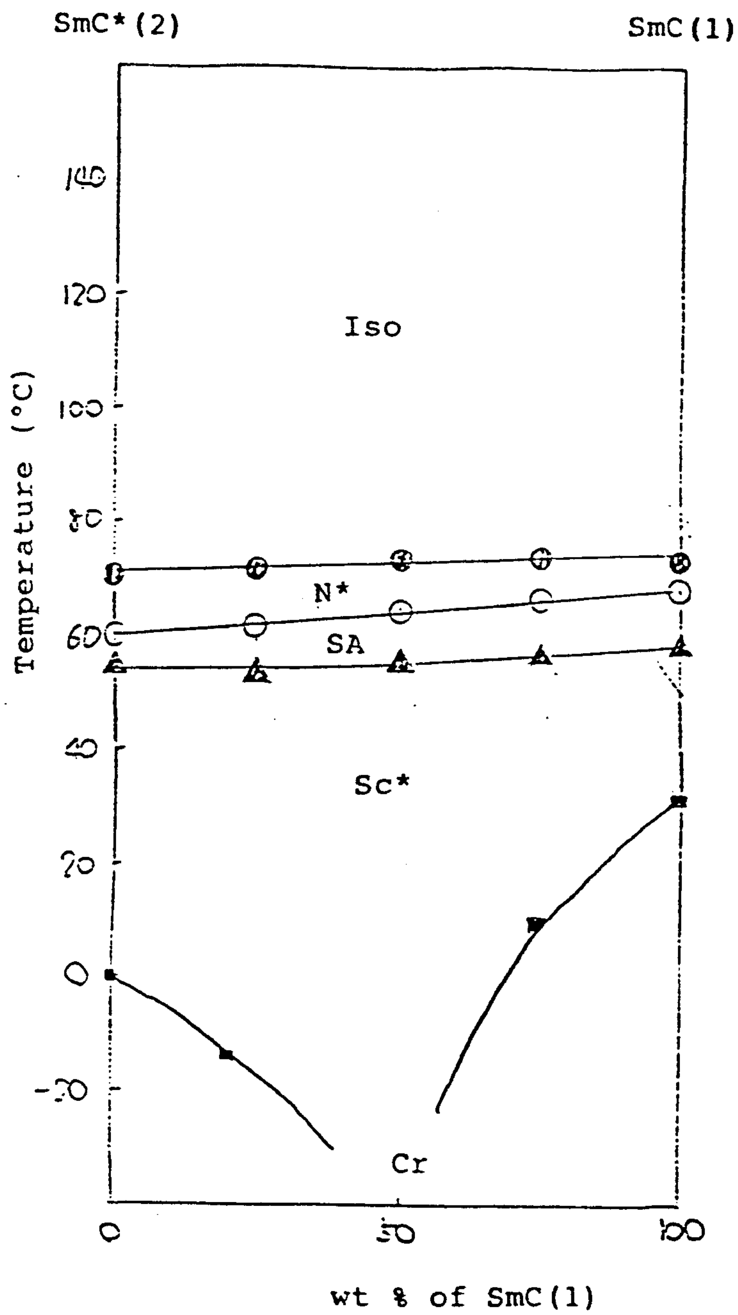
SmC*(2)
SmC(1)
140
120
100
80
60
40
20
0
-20
Temperature (°C)
Iso
N*
SA
Sc*
Cr
0
50
100
wt % of SmC(1)

Fig. 9

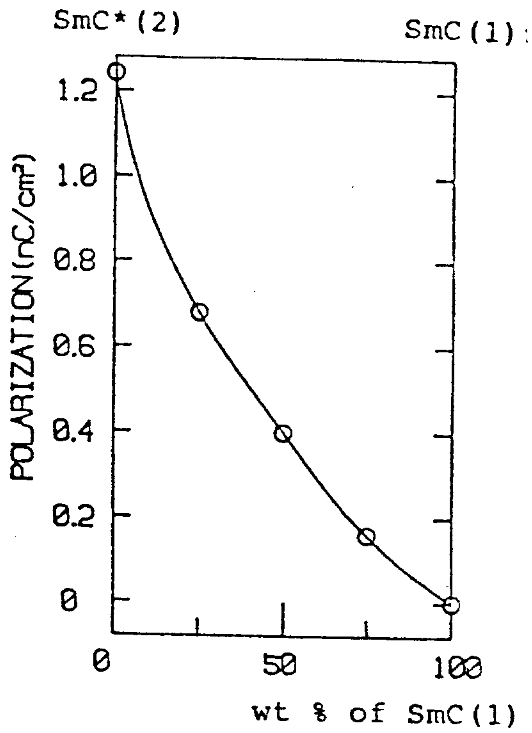
SmC*(2)
SmC(1)
POLARIZATION(nC/cm²)
1.2
1.0
0.8
0.6
0.4
0.2
0
0
50
100
wt % of SmC(1)

Fig. 10

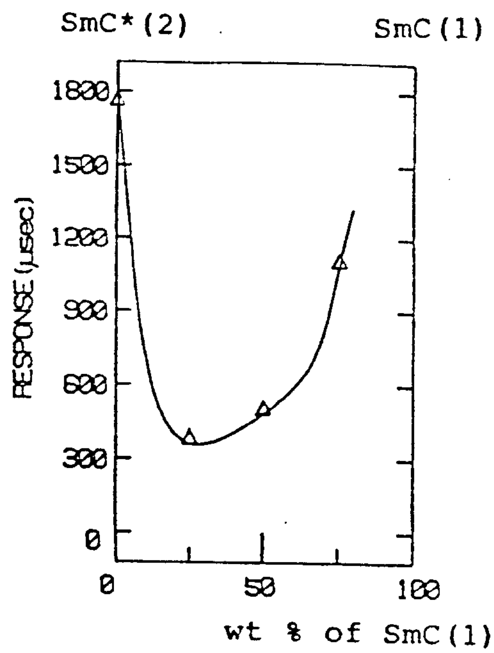
SmC*(2)
SmC(1)
1800
1500
1200
900
600
300
0
RESPONSE (μsec)
0
50
100
wt % of SmC(1)